# EUROPEAN PATENT SPECIFICATION

(11) **EP 4 595 130 B1**
(45) Date of publication and mention of the grant of the patent: **09.12.2026**
(21) Application number: 22814201.4
(22) Date of filing: 30.09.2022
(51) Int. Cl.: H01M 10/54, H01M 10/52, H01M 6/52

(54) **A METHOD FOR RECYCLING OF LITHIUM-ION BATTERIES AND CELLS**
VERFAHREN ZUR WIEDERVERWERTUNG VON LITHIUM-IONEN-BATTERIEN UND ZELLEN
PROCÉDÉ DE RECYCLAGE DE BATTERIES AU LITHIUM-ION ET DE CELLULES

(43) Date of publication of application: 06.08.2025
(73) Proprietor: ELION SP. Z O.O., 05-119 Legionowo (PL)
(72) Inventor: LYSIAK, Marek, 44-114 Gliwice (PL); JAROSZEK, Radoslaw, 44-145 Nieborowice (PL); PIETA, Katarzyna, 41-800 Zabrze (PL); WOJCIECHOWSKI, Szymon, 41-800 Zabrze (PL); SZEWCZYK, Tomasz, 44-100 Gliwice (PL)
(74) Representative: Pietruszynska, Elzbieta
(86) International application number: PCT/PL2022/050061
(87) International publication number: WO 2024/072239

(56) References cited:
- WO-A1-2015/077080

## Description

### Field of Technology

The invention relates to a method for recycling of lithium-ion cells and batteries, in which the black mass is separated from the coarse fraction.

Lithium-ion batteries consist of lithium-ion cells enclosed in metal casings, whereas lithium-ion cells consist of layered electrodes. The anodes, most often covered with copper foil, are separated from the cathodes, most often covered with aluminum foil, by means of a separator. After placing the electrodes in the casing, the casing is filled with an electrolyte, which is an organic solvent containing a lithium salt.

### Background Art

Known methods for recycling lithium-ion batteries comprise a step of grinding spent batteries. Due to the risk of uncontrolled energy release and fire hazard, this step should be carried out under protective conditions. For this purpose, an inert gas atmosphere, e.g., N₂, Ar, CO₂, forced airflow, water spraying, water immersion grinding or grinding down the material previously cooled in liquid nitrogen are used.

WO 2005/101564 A1 and WO 2010/149611 A1 describe methods for recycling lithium-ion batteries in which the batteries are ground in an inert atmosphere. However, the solutions disclosed in those documents do not provide adequate heat removal, which may lead to post-reactions in the lithium-ion battery material.

The prior art describes methods for recycling lithium-ion batteries which comprise grinding lithium-ion batteries under aqueous immersion condition (WO 2010/149611 A1, WO 2018/218358 A1) or under aqueous spray (US 8616475 B1). However, such solutions may result in unfavorable processes of electrolyte hydrolysis and decomposition of salts which are contained in the electrolyte. WO 2015/077080 A1 discloses a method for recycling of lithium-ion batteries wherein used batteries are broken down by the use of a hammer with a water stream under nitrogen.

WO 2018/073101 A1 describes a method in which the ground material is subjected to vacuum drying in order to deactivate and recover the electrolyte. In that method, lithium salts present in the electrolyte remain on the dried material, which makes their recovery difficult and further chemical treatment leads to emission of harmful compounds, e.g. HF. WO 2019/060996 A1 describes a method in which the ground material is immersed in an organic liquid comprising aliphatic carbonates. In the method described therein the grinding step is carried out without the use of an organic liquid and thus the heat is not properly removed. Apart from that, the ground material is kept in an organic liquid without agitation and thus foil is separated from the cathode material to a limited extend.

In the literature there is a publication devoted to the use of simultaneous mixing and ultrasonic washing in an aqueous environment for the separation of an adhesive (J. Li et al. Chemosphere, 2009, 77, 1132-1136). However, the use of water can result in unfavorable decomposition processes of salts contained in the electrolyte.

Another technological issue as regards lithium-ion batteries recycling is a problem related to the occurrence of strong adhesive interactions between the aluminum foil and the active phase of the cathode. The most commonly used adhesive is polyvinylidene fluoride - PVDF. Currently applied solutions consist inter alia in using thermal processes (PVDF burning), dissolving PVDF in organic solvents (most often in N-methyl-2-pyrrolidone) or dissolving aluminum foil in NaOH.

Currently, many known methods do not carry out the mechanical separation of the coarse fraction from the black mass, which results in the introduction, into the process of chemical separation of elements, of a large amount of copper, aluminum and organic compounds included in the casings of lithium-ion batteries.

### Technical Problem

To sum up, the prior art does not know a method that simultaneously eliminates all the risks and problems related to the recycling of lithium-ion cells and batteries, which include, for example, fire hazard, post-reactions in the cell material, hydrolysis of the electrolyte, decomposition of salts contained in the electrolyte, difficulties in separating the coarse fraction from the black mass, etc.

Accordingly, it was an object of the invention to provide a method for recycling of lithium-ion cells and batteries that would enable effective separation of the coarse fraction from the black mass, thereby enhancing the recovery of valuable metals in an economical and safe manner.

### Summary of the Invention

The invention relates to a method for recycling of lithium-ion cells and batteries, comprising the following steps:
a) grinding lithium-ion cells and/or batteries in a grinding device sprayed with an organic solvent and in an inert gas protective atmosphere to form a heterogeneous mixture comprising ground lithium-ion cells and/or batteries and the organic solvent;
b) mechanically stirring the heterogeneous mixture obtained in step a) to form a suspension comprising a coarse fraction, black mass and the organic solvent in which the electrolyte from the lithium-ion cells and/or batteries and binders are dissolved;
c) separating the suspension obtained in step b) into the coarse fraction and a suspension of the black mass in the organic solvent in which the electrolyte from the lithium-ion cells and/or batteries and the binders, are dissolved; and
d) separating the suspension obtained in step c) into the black mass and the organic solvent in which the electrolyte from the lithium-ion cells and/or batteries and the binders are dissolved.

Preferably, the method according to the invention additionally comprises:
- returning the entire organic solvent obtained in step d) to the process; or
- subjecting the entire organic solvent obtained in step d) to step f) which consists in removing compounds having a boiling point above 160°C by means of distillation; or
- subjecting part of the organic solvent obtained in step d) to step f) which consists in removing compounds having a boiling point above 160°C by means of distillation, and optionally returning the remaining part to the process.

Preferably, prior to step f), step e) is additionally carried out which consists in cooling the organic solvent obtained in step d) to a temperature below -5°C in order to precipitate lithium salts and the binders, and to remove them.

Preferably, the lithium salts and binders precipitated in step e) are removed by means of filtration, sedimentation or centrifugation.

Preferably, the method according to the invention additionally comprises recovering diethyl carbonate from the organic solvent obtained in step d) by means of distillation and optionally returning the recovered diethyl carbonate to the process.

Preferably, the method according to the invention further comprises the returning of the organic solvent without compounds having a boiling point above 160°C to the process.

Preferably, step a) is carried out in a grinding mill.

Preferably, in step a), a solvent selected from the group comprising diethyl carbonate, dimethyl carbonate, ethyl methyl carbonate, ethylene carbonate, propylene carbonate or a mixture of at least two of the solvents mentioned is used as the organic solvent.

Preferably, in step b), an additional amount of an organic solvent selected from the group comprising diethyl carbonate, dimethyl carbonate, ethyl methyl carbonate, ethylene carbonate, propylene carbonate or a mixture of at least two of the solvents mentioned is added.

Preferably, the separation in step c) is carried out by means of screening or sorting, and more preferably by means of a vibrating screen with a mesh size of 0.25 mm to 8 mm.

Preferably, the vibrating screen is sprayed with an organic solvent selected from the group comprising diethyl carbonate, dimethyl carbonate, ethyl methyl carbonate, ethylene carbonate, propylene carbonate or a mixture of at least two of the solvents mentioned.

Preferably, the separation in step d) is carried out by means of filtration or a decanting centrifuge.

Preferably, the method according to the invention additionally comprises the step of drying the black mass obtained in step d) and/or the coarse fraction obtained in step c) in order to remove the organic solvent therefrom.

Preferably, the organic solvent obtained after drying the black mass and/or the coarse fraction is returned to the process or is subjected to step f) optionally preceded by step e).

### Advantages of the Invention

Owing to the method of the invention, the problems encountered in the case of applying the recycling methods known from the prior art have been solved. When grinding takes place in a protective atmosphere with simultaneous spraying with an organic water-free liquid, the unfavorable processes of hydrolysis of the electrolyte, decomposition of lithium compounds and (the) emission of harmful fluorine compounds are eliminated. Cooling the ground material also reduces the processes of oxidation and fluorination of the cathode metals. The use of an organic liquid being a component of the electrolyte recovered from spent lithium-ion batteries and/or cells is also economically advantageous.

On the other hand, due to the use of an organic liquid and intensive stirring (and/or ultrasound) in the next step, effective separation of the cathode active phase from the aluminum foil is achieved with little expenditure and without using additional reagents and complex operations. This makes it possible to increase the overall recovery of valuable metals in the process.

Separation of the coarse fraction from the black mass suspension in the organic solvent makes it possible to obtain a mixture of copper and aluminum elements and polymer foils with the organic solvent content of 40-60 weight %. This fraction, previously subjected to vacuum drying, can be separated mechanically into a fraction of copper elements, aluminum elements and polymer foils. Copper elements and aluminum elements can be directed to remelting by metallurgical methods.

Separation of the organic solvent from the ground material (the black mass) by centrifugation or filtration enables the recovery of the electrolyte together with the dissolved lithium salts.

Another feature of the present invention is obtaining products in the form of lithium salts and aliphatic carbonates, which, after appropriate preparation, can be a raw material for the production of new lithium-ion cells.

### Definitions

As used in the description and claims, the terms have the meanings commonly known and used by those skilled in the art to which this invention belongs. For the sake of clarity, however, the following terms should be understood as follows.

The coarse fraction is understood to mean aluminum, copper and polymer foils as well as metal and plastic casings being the component parts of lithium-ion cells and batteries.

The black mass is understood to mean ground cathodes and anodes consisting of graphite and metals, in particular: lithium, cobalt, nickel, manganese. The black mass also includes fragmented metals derived from elements of batteries and cells other than the electrodes (iron, copper, aluminum).

The electrolyte in lithium-ion cells consists of an organic solvent and lithium salts dissolved in it. The most commonly used organic solvents are diethyl carbonate (DEC), dimethyl carbonate (DMC), ethyl methyl carbonate (EMC), ethylene carbonate (EC), propylene carbonate (PC) or mixtures thereof in various proportions.

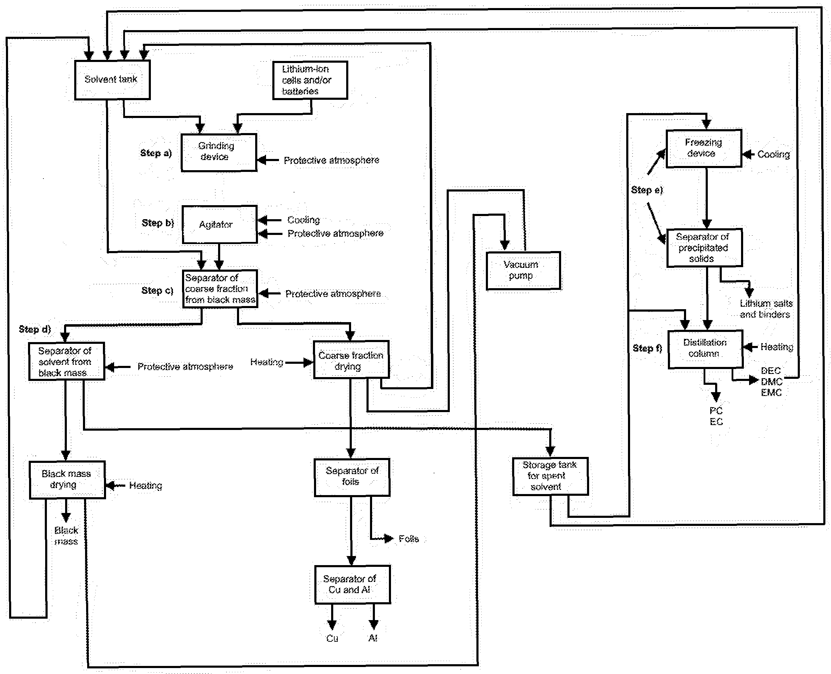

The term "returning to the process" as used herein to refer to an organic solvent (carbonate or a mixture of carbonates) recovered in any of the steps of the method according to the invention means that the entire solvent can be returned to one of steps a) to c) or the said organic solvent can be divided and its individual parts can be returned to one, two or three of steps a) to c). The Figure only illustrates an exemplary option of returning to step a).

### Detailed Description of the Invention

The invention is described in more detail below and is illustrated in the accompanying drawing, in which the Figure shows a simplified diagram of the method according to the invention.

The first step (step a) of the method according to the invention generally consists in grinding the lithium-ion cells and/or batteries in a grinding device, preferably to a size of less than 20x20 mm. A grinding mill is preferably used as the grinding device. However, the selection of an appropriate device is within the skills of the person skilled in the art to which this invention belongs. As a result of grinding, a heterogeneous mixture comprising ground cells and/or batteries and an organic solvent is obtained.

Batteries from laptops, electric cars, small electronics etc. together with additional casings made of plastic or e-cigarettes and power banks as entire devices can be introduced into the grinding device.

The most important in the grinding step is the use of an inert gas protective atmosphere and spraying of the grinding device with an organic solvent. The organic solvent used is a solvent selected from the group comprising diethyl carbonate, dimethyl carbonate, ethyl methyl carbonate, ethylene carbonate, propylene carbonate or a mixture of at least two of the solvents mentioned. From a technological point of view, it is preferable to use solvents that boil at a temperature below 160°C (i.e., dimethyl carbonate, diethyl carbonate or ethyl methyl carbonate) due to the drying process, but diethyl carbonate is most preferably used due to its less toxic and less explosive properties when compared to dimethyl carbonate and ethyl methyl carbonate.

The optimal amount of the solvent to be added to the grinding device is 6 kg per kg of batteries or a device containing the cell (e.g., e-cigarettes). The grinding device is sprayed with a fresh solvent from an external source or with the solvent returned from other steps of the process. Carbon dioxide, nitrogen or another inert gas are used as the protective atmosphere.

The second step of the method according to the invention (step b) consists in the mechanical stirring of the heterogeneous mixture obtained in the grinding step. The use of intensive stirring (and/or ultrasound) in the presence of the organic solvent in this step facilitates the separation of the black mass from the coarse fraction. An additional amount of organic solvent can be added in this step in order to reduce density of the suspension. However, this is not necessary if a sufficient amount of the solvent has been provided in the grinding step. A fresh solvent from an external source or the solvent returned from other steps of the process can be added. The same solvent as used in step a) or another solvent selected from the group comprising diethyl carbonate, dimethyl carbonate, ethyl methyl carbonate, ethylene carbonate, propylene carbonate, or a mixture of at least two of the solvents mentioned can be added. In the step of mechanical stirring, a suspension is obtained that comprises black mass, a coarse fraction and the organic solvent in which the electrolyte from the lithium-ion cells and/or batteries and binders has been dissolved.

In the next step (step c) of the method, the suspension obtained in step b) is separated in order to isolate the coarse fraction from the black mass in the organic solvent. This step can be carried out by any known method, for example by sorting or screening. In the case of screening, preferably a vibrating screen with a mesh size of 0.25 to 8 mm is used. To rinse more thoroughly the black mass from the coarse fraction, the vibrating screen can be sprayed with an organic solvent. A fresh solvent from an external source or the solvent returned from other steps of the process can be used for spraying. The solvent can be the same as in steps a) and/or b) or it can be another solvent selected from the group comprising diethyl carbonate, dimethyl carbonate, ethyl methyl carbonate, ethylene carbonate, propylene carbonate, or a mixture of at least two of the solvents mentioned. This step results in the coarse fraction and a suspension of the black mass in the organic solvent in which the electrolyte from the lithium-ion cells and/or batteries and the binders has been dissolved.

In the next step (step d) of the method, the suspension of the black mass obtained in step c) above is separated into the black mass and the organic solvent comprising the dissolved electrolyte from the lithium-ion cells and/or batteries and binders. This step can be carried out by means of a decanting centrifuge or by filtration with the use of bag filters (preferably having pore size of 10-100 µm). Taking into account operator safety and higher efficiency of black mass separation, the more preferable solution is to use the decanting centrifuge.

Furthermore, steps b), c) and d) are also preferably carried out under a protective inert gas atmosphere in order to displace the oxygen. The use of an oxygen-free atmosphere eliminates the risk of ignition of flammable solvents. As in the case of step a), carbon dioxide, nitrogen or another inert gas are used to provide the protective atmosphere.

In the case of the solvent separated from the black mass in step d) there are several options:
1. The entire organic solvent obtained in step d) can be returned to the process without any treatment.
2. The entire organic solvent obtained in step d) can be subjected to step f) comprising distillation, preferably fractional distillation in order to remove compounds having a boiling point above 160°C (i.e., ethylene carbonate and propylene carbonate) and to obtain a mixture of compounds having a boiling point below 160°C (i.e., diethyl carbonate, dimethyl carbonate and ethyl-methyl carbonate).

Before the step of removing compounds having a boiling point above 160°C, an additional step e) of cooling the organic solvent to a temperature below -5°C can be carried out in order to precipitate lithium salts and the binders. Lithium salts and binders are then removed by filtration, sedimentation or centrifugation. The performance of step e) is preferable, but not necessary.

3. Part of the organic solvent obtained in step d) can be subjected to step f) comprising distillation, preferably fractional distillation, in order to remove compounds having a boiling point above 160°C (i.e., ethylene carbonate and propylene carbonate) and to obtain a mixture of compounds having a boiling point below 160°C (i.e., diethyl carbonate, dimethyl carbonate and ethyl methyl carbonate). The second part of the organic solvent obtained in step d) can be returned to the process.

Before the step of removing compounds having a boiling point above 160°C, an additional step e) of cooling the organic solvent to a temperature below -5°C can be carried out in order to precipitate lithium salts and the binders. Lithium salts and binders are then removed by filtration, sedimentation or centrifugation. The performance of step e) is preferable, but not necessary.

The solvent without compounds having a boiling point above 160°C can be returned to the process.

Furthermore, during the process of distillation (step f), preferably fractional distillation, to which the entire or part of the solvent obtained in step d) is subjected, diethyl carbonate or part thereof can be recovered. The step of recovering diethyl carbonate can be carried out regardless of whether or not the step of removing the compounds having a boiling point above 160°C (step f) was preceded by the step of removing lithium salts and binders (step e). Then, diethyl carbonate can optionally be returned to the process (not shown in the Figure).

Both the black mass obtained in step d) and the coarse fraction obtained in step c) can be subjected to vacuum drying in order to remove the remaining organic solvent. The solvent recovered during drying can then be optionally returned to the process or can be subjected to the above-described step f) optionally preceded by step e) (not shown in the Figure).

### Examples

The invention is illustrated by the following Examples, which, however, are not intended to limit the invention.

### Example 1.

Grinding 250 kg of spent lithium-ion batteries from electric cars was carried out in the grinding mill equipped with four 15 kW drives powered with inverters. The batteries were fed to the mill automatically by means of a feeder through a charging hopper equipped with two gate valves and a spraying chamber. A solvent - a mixture of diethyl carbonate, dimethyl carbonate and ethyl methyl carbonate in the ratio of 5:3:2 in the amount of about 6 kg of solvent per kilogram of batteries was fed to the spraying chamber in order to form a suspension and cool the internal elements of the grinding mill.

Carbon dioxide was fed to the gate valves and grinding chambers in order to make the working environment inert. The solvent was fed to the grinding mill in the spraying section by means of four nozzles. Both grinding chambers were equipped with two shafts on which knives were mounted. The batteries from the grinding mill, ground to a size of 10x10 mm, were transported by gravity to a horizontal agitator.

The solvent vapors from the spraying section were directed to a shell-and-tube heat exchanger (cold trap) cooled with propylene glycol at a temperature of -25°C. The condensed solvent vapors were recycled to the process.

Carbon dioxide for inertization and the solvent (a mixture of diethyl carbonate, dimethyl carbonate and ethyl methyl carbonate in the ratios 5:3:2) were fed to the agitator in the amount of 2 kg of solvent/kg of batteries, in order to increase the fluidity of the suspension. The agitator was equipped with two 3 kW horizontal stirrer with inverters, which stirrer due to their structure, disrupted larger parts of the casing and allowed the black mass to be washed out into the solvent.

The black mass suspension in the solvent was separated from the coarse fraction by means of a vibrating screen with a mesh size of 3 mm. The vibrating screen was sprayed with a fresh solvent (5:3:2 mixture of diethyl carbonate, dimethyl carbonate and ethyl methyl carbonate) by means of rinsing nozzles. The black mass with the solvent got through the holes in the screen bottom and flowed by gravity to the settling tank installed in the lower part of the screen. The black mass settled on the bottom of the settling tank, from where it was directed to the decanting centrifuge. The black mass was then subjected to vacuum drying, and the evaporated solvent was then condensed and returned to the process.

The purified solvent from the decanting centrifuge was entirely directed to the distillation column, operating at atmospheric pressure, and the temperature in the column pot was 160°C. The solvent in the distillation column was separated into two fractions - compounds boiling at a temperature lower than 160°C (diethyl carbonate, dimethyl carbonate and ethyl methyl carbonate in the ratio of about 8:1:1) and compounds boiling at a temperature higher than 160°C (propylene carbonate and ethylene carbonate in the ratio of 2:3). The mixture of carbonates boiling below 160°C was returned to the process.

### Example 2

The process was carried out by the method as described in Example 1, except that the solvent added to the agitator and used to spray the vibrating screen was diethyl carbonate instead of the 5:3:2 mixture of diethyl carbonate, dimethyl carbonate and ethyl methyl carbonate, and except that 80 weight % of the solvent from the decanting centrifuge was returned directly to the process, while the remaining 20 weight % was directed to a freezing device (cold trap) where the solvent was cooled to -30°C and this temperature was maintained for 4 h. Subsequently, the cooled solvent was filtered using bag filters in order to separate the precipitated solids. 0.8 kg of lithium salts and binders were separated. The solvent stream was then heated to 30°C by means of two shell-and-tube heat exchangers and was directed to the pot of distillation column. The solvent in the pot was heated to 140°C and at the column top, at a temperature of about 125°C, a mixture of diethyl carbonate, dimethyl carbonate and ethyl methyl carbonate with ethylene carbonate and propylene carbonate content below 1 weight % was collected. A mixture of diethyl carbonate, ethylene carbonate and propylene carbonate in the ratio of 4:1:1 was collected from the column pot.

### Example 3

The process was carried out by the method as described in Example 1, except that the solvent stream was directed to the pot of the fractional distillation column. The solvent in the column pot was heated to 180°C. From the theoretical plate, where the temperature stabilized at 126.5°C, approx. 13 weight % of diethyl carbonate having 99.3% purity, was collected. A mixture of dimethyl carbonate, ethyl methyl carbonate and diethyl carbonate was collected at the column top. Pure diethyl carbonate was returned to step c) of the recycling process of lithium-ion batteries, while the carbonate mixture was returned to step a). A mixture of ethylene carbonate and propylene carbonate with diethyl carbonate content <2 weight % was collected from the column pot.

### Example 4

The feed of the grinding mill consisted of 100 kg of charged lithium-ion batteries from laptops and small electronics. Knives having a width of 12 mm were mounted in the first grinding stage, and knives having a width of 6 mm in the second stage. The mill shafts were spraying with the solvent - diethyl carbonate through 8 spraying nozzles, the amount used was 8 kg of solvent per kilogram of batteries. Carbon dioxide was fed to the mill in order to make the working environment inert.

An increase in temperature was observed in the agitator, that is why the agitator jacket was cooled with cooling water. No additional spraying was applied in the agitator.

The black mass suspension in the solvent was separated from the coarse fraction by means of a vibrating screen with a mesh size of 3 mm. The black mass suspension was fed to bag filters, separating the suspension into a stream of the black mass with moisture content of 40 weight % and the solvent with black mass content of less than 1%. The entire solvent separated from the black mass was returned to the grinding step without freezing and purification in the distillation column. Both the black mass and the coarse fraction were vacuum dried.

## Claims

1. A method for recycling of lithium-ion cells and batteries, **characterized in that** it comprises the following steps:
a) grinding lithium-ion cells and/or batteries in a grinding device sprayed with an organic solvent and in an inert gas protective atmosphere to form a heterogeneous mixture comprising ground lithium-ion cells and/or batteries and the organic solvent;
b) mechanically stirring the heterogeneous mixture obtained in step a) to form a suspension comprising a coarse fraction, black mass and the organic solvent in which the electrolyte from the lithium-ion cells and/or batteries and binders are dissolved;
c) separating the suspension obtained in step b) into the coarse fraction and a suspension of the black mass in the organic solvent in which the electrolyte from the lithium-ion cells and/or batteries and the binders are dissolved; and
d) separating the suspension obtained in step c) into the black mass and the organic solvent in which the electrolyte from the lithium-ion cells and/or batteries and the binders are dissolved.

2. The method according to claim 1, **characterized in that** the entire organic solvent obtained in step d) is returned to the process.

3. The method according to claim 1, **characterized in that** the entire organic solvent obtained in step d) is subjected to step f) which consists in removing compounds having a boiling point above 160°C by means of distillation.

4. The method according to claim 1, **characterized in that** part of the organic solvent obtained in step d) is subjected to step f) which consists in removing compounds having a boiling point above 160°C by means of distillation, and the remaining part is optionally returned to the process.

5. The method according to claim 3 or 4, **characterized in that**, prior to step f), step e) is additionally carried out which consists in cooling the organic solvent obtained in step d) to a temperature below -5°C in order to precipitate lithium salts and the binders, and to remove them.

6. The method according to claim 5, **characterized in that** the lithium salts and the binders precipitated in step e) are removed by means of filtration, sedimentation or centrifugation.

7. The method according to claims 3 to 6, **characterized in that** it additionally comprises recovering diethyl carbonate from the organic solvent obtained in step d) by means of distillation and optionally returning the recovered diethyl carbonate to the process.

8. The method according to claims 3 to 7, **characterized in that** it additionally comprises the returning of the organic solvent without compounds having a boiling point above 160°C to the process.

9. The method according to claims 1 to 8, **characterized in that** step a) is carried out in a grinding mill.

10. The method according to claims 1 to 9, **characterized in that** in step a), a solvent selected from the group comprising diethyl carbonate, dimethyl carbonate, ethyl methyl carbonate, ethylene carbonate, propylene carbonate or a mixture of at least two of the solvents mentioned is used as the organic solvent.

11. The method according to claims 1 to 10, **characterized in that** in step b), an additional amount of an organic solvent selected from the group comprising diethyl carbonate, dimethyl carbonate, ethyl methyl carbonate, ethylene carbonate, propylene carbonate or a mixture of at least two of the solvents mentioned is added.

12. The method according to claims 1-11, **characterized in that** the separation in step c) is carried out by means of screening or sorting.

13. The method according to claim 12, **characterized in that** the separation in step c) is carried out by means of a vibrating screen with a mesh size of 0.25 mm to 8 mm.

14. The method according to claim 13, **characterized in that** the vibrating screen is sprayed with an organic solvent selected from the group comprising diethyl carbonate, dimethyl carbonate, ethyl methyl carbonate, ethylene carbonate, propylene carbonate or a mixture of at least two of the solvents mentioned.

15. The method according to claims 1 to 14, **characterized in that** the separation in step d) is carried out by means of filtration or a decanting centrifuge.

16. The method according to claims 1 to 15, **characterized in that** it additionally comprises the step of drying the black mass obtained in step d) and/or the coarse fraction obtained in step c) in order to remove the organic solvent therefrom.

17. The method according to claim 16, **characterized in that** the organic solvent obtained after drying the black mass and/or the coarse fraction is returned to the process or is subjected to step f) optionally preceded by step e).

## Patentansprüche

1. Verfahren zum Recycling von Lithium-Ionen-Zellen und -Batterien, **dadurch gekennzeichnet, dass** es die folgenden Schritte umfasst:
a) Zerkleinern von Lithium-Ionen-Zellen und/oder -Batterien in einer Zerkleinerungsvorrichtung, in der ein organisches Lösungsmittel unter einer Schutzatmosphäre aus Inertgas versprüht wird, um ein heterogenes Gemisch zu erzeugen, das zerkleinerte Lithium-Ionen-Zellen und/oder -Batterien und das organische Lösungsmittel enthält;
b) mechanisches Rühren des im Schritt a) erhaltenen heterogenen Gemisches, um eine Suspension zu bilden, die eine grobkörnige Fraktion, Schwarzmasse sowie ein organisches Lösungsmittel enthält, in dem der aus den Lithium-Ionen-Zellen und/oder -Batterien stammende Elektrolyt sowie Bindemittel gelöst sind;
c) Trennen der im Schritt b) erhaltenen Suspension in eine grobkörnige Fraktion und eine Suspension der Schwarzmasse in einem organischen Lösungsmittel, in dem der aus Lithium-Ionen-Zellen und/oder -Batterien stammende Elektrolyt sowie Bindemittel gelöst sind; und
d) Trennen der im Schritt c) erhaltenen Suspension in Schwarzmasse und organisches Lösungsmittel, in dem der aus Lithium-Ionen-Zellen und/oder -Batterien stammende Elektrolyt sowie Bindemittel gelöst sind.

2. Verfahren nach Anspruch 1, **dadurch gekennzeichnet, dass** das gesamte im Schritt d) gewonnene organische Lösungsmittel in den Prozess zurückgeführt wird.

3. Verfahren nach Anspruch 1, **dadurch gekennzeichnet, dass** das gesamte im Schritt d) gewonnene organische Lösungsmittel dem Schritt f) unterzogen wird, der darin besteht, Verbindungen mit einem Siedepunkt über 160 °C durch Destillation zu entfernen.

4. Verfahren nach Anspruch 1, **dadurch gekennzeichnet, dass** ein Teil des im Schritt d) erhaltenen organischen Lösungsmittels dem Schritt f) unterzogen wird, der darin besteht, Verbindungen mit einem Siedepunkt über 160 °C durch Destillation zu entfernen, und der verbleibende Teil gegebenenfalls in den Prozess zurückgeführt wird.

5. Verfahren nach Anspruch 3 oder 4, **dadurch gekennzeichnet, dass** vor dem Schritt f) zusätzlich der Schritt e) durchgeführt wird, der darin besteht, das im Schritt d) erhaltene organische Lösungsmittel auf eine Temperatur unter -5 °C abzukühlen, um Lithiumsalze und Bindemittel auszufällen und diese zu entfernen.

6. Verfahren nach Anspruch 5, **dadurch gekennzeichnet, dass** die im Schritt e) ausgefällten Lithiumsalze und Bindemittel durch Filtration, Sedimentation oder Zentrifugation entfernt werden.

7. Verfahren nach den Ansprüchen 3 bis 6, **dadurch gekennzeichnet, dass** es zusätzlich die Rückgewinnung von Diethylcarbonat aus dem im Schritt d) erhaltenen organischen Lösungsmittel durch Destillation sowie gegebenenfalls die Rückführung des zurückgewonnenen Diethylcarbonats in den Prozess umfasst.

8. Verfahren nach den Ansprüchen 3 bis 7, **dadurch gekennzeichnet, dass** es zusätzlich die Rückführung des organischen Lösungsmittels ohne Verbindungen mit einem Siedepunkt über 160 °C in den Prozess umfasst.

9. Verfahren nach den Ansprüchen 1 bis 8, **dadurch gekennzeichnet, dass** der Schritt a) in einer Zerkleinerungsmühle durchgeführt wird.

10. Verfahren nach den Ansprüchen 1 bis 9, **dadurch gekennzeichnet, dass** im Schritt a) als organisches Lösungsmittel ein Lösungsmittel, ausgewählt aus der Gruppe umfassend Diethylcarbonat, Dimethylcarbonat, Ethylmethylcarbonat, Ethylencarbonat, Propylencarbonat oder eine Mischung von mindestens zwei der genannten Lösungsmittel verwendet wird.

11. Verfahren nach den Ansprüchen 1 bis 10, **dadurch gekennzeichnet, dass** im Schritt b) eine zusätzliche Menge an organischem Lösungsmittel, ausgewählt aus der Gruppe umfassend Diethylcarbonat, Dimethylcarbonat, Ethylmethylcarbonat, Ethylencarbonat, Propylencarbonat oder eine Mischung von mindestens zwei der genannten Lösungsmittel, zugegeben wird.

12. Verfahren nach den Ansprüchen 1 bis 11, **dadurch gekennzeichnet, dass** das Trennen im Schritt c) durch Sieben oder Sortieren erfolgt.

13. Verfahren nach den Anspruch 12, **dadurch gekennzeichnet, dass** das Trennen im Schritt c) mittels eines Vibrationssiebs mit einer Maschenweite von 0,25 mm bis 8 mm erfolgt.

14. Verfahren nach Anspruch 13, **dadurch gekennzeichnet, dass** auf das Vibrationssieb ein organisches Lösungsmittel, ausgewählt aus der Gruppe umfassend Diethylcarbonat, Dimethylcarbonat, Ethylmethylcarbonat, Ethylencarbonat, Propylencarbonat oder eine Mischung von mindestens zwei der genannten Lösungsmittel, aufgesprüht wird.

15. Verfahren nach den Ansprüchen 1 bis 14, **dadurch gekennzeichnet, dass** das Trennen im Schritt d) durch Filtration oder unter Verwendung einer Dekantierzentrifuge erfolgt.

16. Verfahren nach den Ansprüchen 1 bis 15, **dadurch gekennzeichnet, dass** es zusätzlich einen Schritt zum Trocknen der im Schritt d) erhaltenen Schwarzmasse und/oder der im Schritt c) erhaltenen grobkörnigen Fraktion umfasst, um das organische Lösungsmittel daraus zu entfernen.

17. Verfahren nach Anspruch 16, **dadurch gekennzeichnet, dass** das nach dem Trocknen der Schwarzmasse und/oder der grobkörnigen Fraktion erhaltene organische Lösungsmittel in den Prozess zurückgeführt oder dem Schritt f) unterzogen wird, dem gegebenenfalls der Schritt e) vorausgeht.

## Revendications

1. Le procédé de recyclage des piles et des batteries lithium-ion, **caractérisé en ce qu'**il comprend les étapes suivantes :
a) Le broyage des piles et/ou des batteries lithium-ion dans un broyeur, dans lequel un solvant organique est pulvérisé, sous une atmosphère protectrice d'un gaz inerte, afin de former un mélange hétérogène contenant les piles et/ou les batteries lithium-ion broyées ainsi que le solvant organique;
b) Le malaxage mécanique du mélange hétérogène obtenu à l'étape a) afin de former une suspension contenant une fraction grossière, une masse noire et un solvant organique dans lequel sont dissous l'électrolyte provenant des piles et/ou des batteries lithium-ion ainsi que les liants ;
c) La séparation de la suspension obtenue à l'étape b) en une fraction grossière et une suspension de matière noire dans le solvant organique, dans lequel sont dissous l'électrolyte provenant des piles et/ou des batteries lithium-ion ainsi que les liants ; et
d) La séparation de la suspension obtenue à l'étape c) en une masse noire et en un solvant organique dans lequel sont dissous l'électrolyte provenant des piles et/ou des batteries lithium-ion ainsi que les liants.

2. Le procédé selon la revendication 1, **caractérisé en ce que** la totalité du solvant organique obtenu à l'étape d) est réintroduite dans le procédé.

3. Le procédé selon la revendication 1, **caractérisé en ce que** la totalité du solvant organique obtenu à l'étape d) est soumise à l'étape f), qui consiste à éliminer par distillation les composés dont la température d'ébullition est supérieure à 160 °C.

4. Le procédé selon la revendication 1, **caractérisé en ce qu'**une partie du solvant organique obtenu à l'étape d) est soumise à l'étape f), qui consiste à éliminer par distillation les composés dont la température d'ébullition est supérieure à 160 °C, et **en ce que** la partie restante est, le cas échéant, réintroduite dans le procédé.

5. Le procédé selon la revendication 3 ou 4, **caractérisé en ce qu'**avant l'étape f), on effectue en complément l'étape e), qui consiste à refroidir le solvant organique obtenu à l'étape d) à une température inférieure à -5 °C afin de précipiter les sels de lithium et les liants et de les éliminer.

6. Le procédé selon la revendication 5, **caractérisé en ce que** les sels de lithium et les liants précipités à l'étape e) sont éliminés par filtration, sédimentation ou centrifugation.

7. Le procédé selon les revendications 3 à 6, **caractérisé en ce qu'**il comprend, en outre, la récupération du carbonate de diéthyle à partir du solvant organique obtenu à l'étape d) par distillation et, en option, la réintroduction du carbonate de diéthyle récupéré dans le procédé.

8. Le procédé selon les revendications 3 à 7, **caractérisé en ce qu'**il comprend, en outre, la réintroduction dans le procédé d'un solvant organique exempt de composés dont le point d'ébullition est supérieur à 160 °C.

9. Le procédé selon les revendications 1 à 8, **caractérisé en ce que** l'étape a) est réalisée dans un broyeur.

10. Le procédé selon les revendications 1 à 9, **caractérisé en ce qu'**à l'étape a) on utilise comme solvant organique un solvant choisi parmi le groupe comprenant le carbonate de diéthyle, le carbonate de diméthyle, le carbonate d'éthyle-méthyle, le carbonate d'éthylène, le carbonate de propylène ou un mélange d'au moins deux des solvants cités.

11. Le procédé selon les revendications 1 à 10, **caractérisé en ce qu'**à l'étape b) on ajoute une quantité supplémentaire de solvant organique choisi parmi le groupe comprenant le carbonate de diéthyle, le carbonate de diméthyle, le carbonate d'éthyle-méthyle, le carbonate d'éthylène, le carbonate de propylène ou un mélange d'au moins deux des solvants cités.

12. Le procédé selon les revendications 1 à 11, **caractérisé en ce que** la séparation à l'étape c) est effectuée par tamisage ou tri.

13. Le procédé selon la revendication 12, **caractérisé en ce que** la séparation à l'étape c) est effectuée à l'aide d'un tamis vibrant dont la taille des mailles est comprise entre 0,25 mm et 8 mm.

14. Le procédé selon la revendication 13, **caractérisé en ce qu'**on pulvérise sur le tamis vibrant un solvant organique choisi parmi le groupe comprenant le carbonate de diéthyle, le carbonate de diméthyle, le carbonate d'éthyle et de méthyle, le carbonate d'éthylène, le carbonate de propylène ou un mélange d'au moins deux des solvants cités.

15. Le procédé selon les revendications 1 à 14, **caractérisé en ce que** la séparation à l'étape d) est effectuée par filtration ou à l'aide d'une centrifugeuse de décantation.

16. Le procédé selon les revendications 1 à 15, **caractérisé en ce qu'**il comprend, en outre, une étape de séchage de la masse noire obtenue à l'étape d) et/ou de la fraction grossière obtenue à l'étape c) afin d'en éliminer le solvant organique.

17. Le procédé selon la revendication 16, **caractérisé en ce que** le solvant organique obtenu après séchage de la masse noire et/ou de la fraction grossière est réintroduit dans le procédé ou est soumis à l'étape f), optionnellement précédée de l'étape e).
